# EUROPEAN PATENT APPLICATION

(11) **EP 4 290 426 A1**
(43) Date of publication of application: **13.12.2023**
(21) Application number: 21924640.2
(22) Date of filing: 04.02.2021
(51) Int. Cl.: G06N 20/00

(54) **ACCURACY CALCULATION PROGRAM, ACCURACY CALCULATION METHOD, AND INFORMATION PROCESSING DEVICE**

(71) Applicant: FUJITSU LIMITED, Kawasaki-shi, Kanagawa 211-8588 (JP)
(72) Inventor: OKURA, Seiji, Kawasaki-shi, Kanagawa 211-8588 (JP)
(74) Representative: Hoffmann Eitle
(86) International application number: PCT/JP2021/004189
(87) International publication number: WO 2022/168245

(57) **Abstract**

An information processing device (10) acquires a data item corresponding to a generation condition or a combination of data items, based on the generation condition based on a correspondence relationship between a combination of one or a plurality of features and label information and an input dataset that is a set of input data including at least one data item, as a selection target rule. The information processing device (10) calculates accuracy of each of a plurality of machine learning algorithms, using a dataset that holds only a data item used for a selection rule that is a selection target rule satisfying a specific condition, from among the selection target rules.

## Description

### FIELD

The present invention relates to an accuracy calculation program, an accuracy calculation method, and an information processing device.

### BACKGROUND

As a machine learning model generated through machine learning, a white box type model of which determination basis is easily explained or a black box type model of which determination basis is hard to be explained are known. For example, as a machine learning algorithm used for the white box type model, a decision tree, a random forest, logistic regression, and the like are known, and as a machine learning algorithm used for the black box type model, a neural network, deep learning, and the like are known.

In a case where such a machine learning algorithm is used, it is general to select a method from among all methods in a case where only accuracy is important. It is general to use a white box type method in a case where explanatory is particularly important. On the other hand, by knowing in advance whether or not a useful effect can be obtained with an optimal method or with which machine learning algorithm when performing machine learning using data in a tabular format or the like, efficiency, accuracy, or the like of machine learning are enhanced. In recent years, various tools that automatically perform model calculation or the like have been known.

### CITATION LIST

### PATENT DOCUMENT

Patent Document 1: Japanese Laid-open Patent Publication No. 2017-4509
Patent Document 2: Japanese Laid-open Patent Publication No. 2020-46888

### SUMMARY

### [TECHNICAL PROBLEM]

However, in a case where a machine learning algorithm is selected using the tool described above or the like, it is difficult to determine whether or not model comparison is appropriate, and reliability of the selection result is low.

For example, since a data type or a machine learning algorithm supported by the tool differs, there is a case where an optimal machine learning algorithm is not included in selection candidates. Furthermore, although it is considered to perform selection by executing the plurality of tools, there is a case where different machine learning algorithms are determined to be the best by a narrow margin. However, there is a case where determination basis of the narrow margin is unknown and determination results of the respective tools are not compatible.

In one aspect, an object is to provide an accuracy calculation program, an accuracy calculation method, and an information processing device that can optimize accuracy comparison of a plurality of machine learning algorithms.

### [SOLUTION TO PROBLEM]

In a first idea, an accuracy calculation program causes a computer to execute processing for acquiring a data item corresponding to a generation condition or a combination of data items, as a selection target rule, based on the generation condition based on a correspondence relationship between a combination of one or a plurality of features and label information and an input dataset that is a set of input data including at least one data item. The accuracy calculation program causes the computer to execute processing for calculating accuracy of each of the plurality of machine learning algorithms, using a dataset that holds only a data item used for a selection rule that is the selection target rule satisfying a specific condition, among the selection target rules.

According to an aspect of the embodiments, an accuracy calculation program that causes a computer to execute a process, the process includes acquiring a data item that corresponds to a generation condition or a combination of the data items, based on the generation condition based on a correspondence relationship between a combination of one or a plurality of features and label information and an input dataset that is a set of input data that includes at least one data item, as a selection target rule; and calculating accuracy of each of a plurality of machine learning algorithms, by using a dataset that holds only a data item used for a selection rule that is a selection target rule that satisfies a specific condition among the selection target rules.

### [ADVANTAGEOUS EFFECTS OF INVENTION]

According to one embodiment, it is possible to optimize accuracy comparison of a plurality of machine learning algorithms.

### BRIEF DESCRIPTION OF DRAWINGS

FIG. 1 is a diagram for explaining an information processing device according to a first embodiment;
FIG. 2 is a functional block diagram illustrating a functional configuration of the information processing device according to the first embodiment;
FIG. 3 is a diagram for explaining an example of input data stored in an input data DB;
FIG. 4 is a diagram for explaining generation of a rule;
FIG. 5 is a diagram for explaining selection of a rule;
FIG. 6 is a diagram for explaining evaluation of a machine learning model;
FIG. 7 is a diagram for explaining accuracy prediction of the machine learning model;
FIG. 8 is a diagram for explaining an example of an output result;
FIG. 9 is a flowchart illustrating a flow of processing according to the first embodiment;
FIG. 10 is a diagram for explaining generation of a rule according to a second embodiment;
FIG. 11 is a diagram for explaining selection of a rule according to the second embodiment;
FIG. 12 is a diagram for explaining evaluation of a machine learning model according to the second embodiment;
FIG. 13 is a diagram for explaining accuracy prediction of the machine learning model according to the second embodiment;
FIG. 14 is a diagram for explaining an example of an output result according to the second embodiment;
FIG. 15 is a diagram for explaining another example of the rule selection; and
FIG. 16 is a diagram for explaining a hardware configuration example.

### DESCRIPTION OF EMBODIMENTS

Hereinafter, embodiments of an accuracy calculation program, an accuracy calculation method, and an information processing device according to the present invention will be described in detail with reference to the drawings. Note that the embodiments do not limit the present invention. Furthermore, the embodiments may be appropriately combined with each other in a range without contradiction.

### [First Embodiment]

### [Description of Information Processing Device]

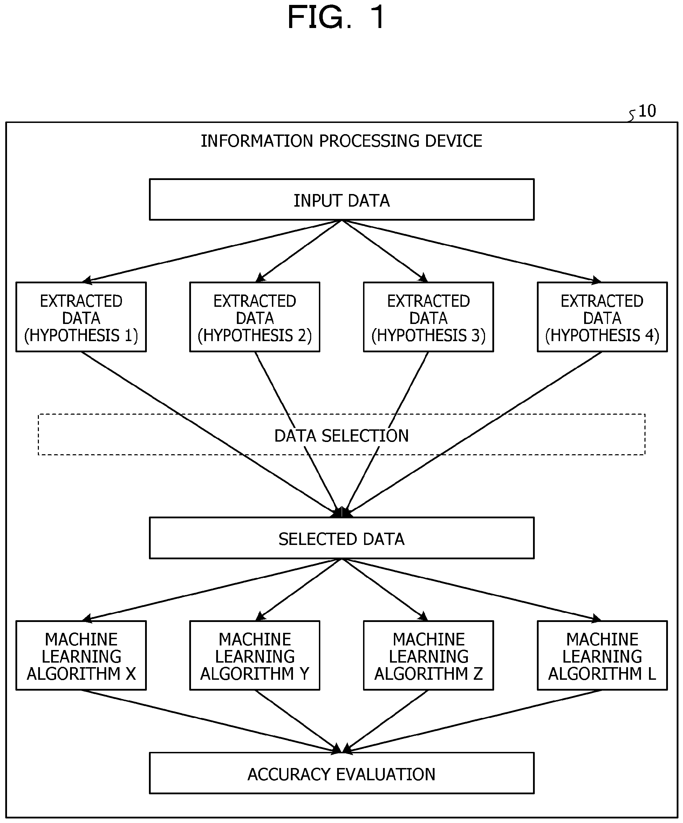

FIG. 1 is a diagram for explaining an information processing device 10 according to a first embodiment. The information processing device 10 illustrated in FIG. 1 is an example of a computer that can generate an evaluation index used to select an optimal machine learning algorithm that can be expected to have an effect from among a plurality of machine learning algorithms, when it is desired to generate a machine learning model through machine learning using input data in a tabular format or the like.

In recent years, various tools that automatically perform model calculation have been known. Each of such automated tools shortens an execution time using a unique method without trying every hyperparameter of every machine learning algorithm, further limits the execution time, and randomly searches for a parameter. Therefore, it is difficult for the automated tool to optimize accuracy comparison of the plurality of machine learning algorithms.

Therefore, the information processing device 10 according to the first embodiment can perform sufficient comparison verification of each model, by covering a possibility of parameter search at the time of model calculation using the machine learning algorithm within a certain time period to the maximum.

Specifically, as illustrated in FIG. 1, the information processing device 10 acquires a data item corresponding to a generation condition or a combination of data items, as a selection target rule, based on the generation condition based on a correspondence relationship between a combination of one or a plurality of features and label information and an input dataset that is a set of input data including at least one data item. Then, the information processing device 10 calculates accuracy of each of the plurality of machine learning algorithms, using a dataset that holds only a data item used for a selection rule that is a selection target rule satisfying a specific condition, among the selection target rules.

For example, the information processing device 10 extracts a combination of columns (rule) of data items corresponding to each hypothesis, about each hypothesis that is a set of rules describing that prediction is performed according to an objective variable. At this time, each rule (combination of columns) can be generated, for example, using the technology in Japanese Laid-open Patent Publication No. 2020-46888 and can include an importance (weight) corresponding to each hypothesis. Note that the weight can be calculated through logistic regression using each rule as training data.

Then, the information processing device 10 selects a combination of a plurality of columns corresponding to a preset specific condition, as the selection data, from among the plurality of extracted combinations of columns. Thereafter, the information processing device 10 can perform parameter search and evaluation of each machine learning algorithm using the selected combination of columns and outputs an execution result.

In this way, the information processing device 10 can search for a machine learning model with high accuracy under the same condition in many hypotheses and present the result to a user.

### [Functional Configuration]

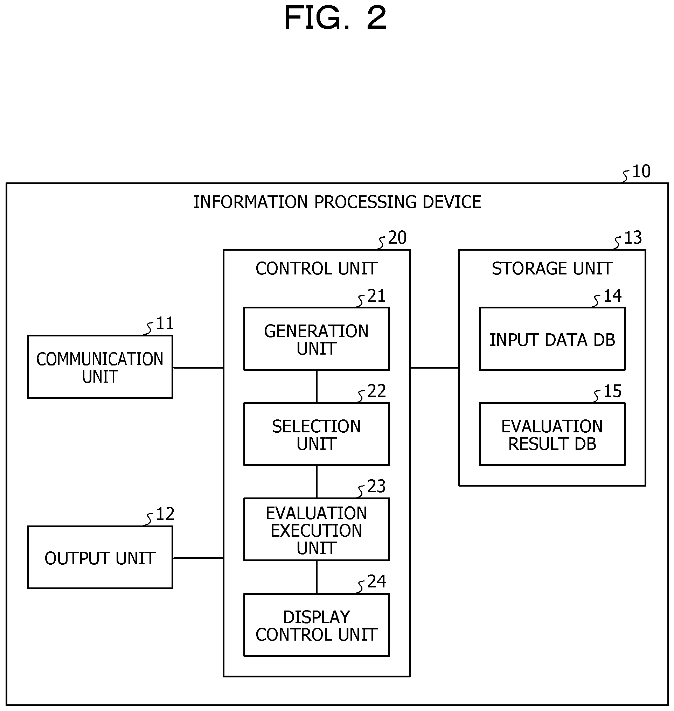

FIG. 2 is a functional block diagram illustrating a functional configuration of the information processing device 10 according to the first embodiment. As illustrated in FIG. 2, the information processing device 10 includes a communication unit 11, an output unit 12, a storage unit 13, and a control unit 20.

The communication unit 11 is a processing unit that controls communication with another device and, for example, is implemented by a communication interface or the like. For example, the communication unit 11 receives various instructions or the like from an administrator's terminal or the like and transmits an execution result or the like to the administrator's terminal or the like.

The output unit 12 is a processing unit that outputs various types of information and is implemented, for example, by a display, a touch panel, or the like. For example, the output unit 12 displays and outputs an evaluation result generated by the control unit 20 to be described later.

The storage unit 13 is an example of a storage device that stores various types of data, programs, or the like and is implemented, for example, by a memory, a hard disk, or the like. The storage unit 13 stores an input data DB 14 and an evaluation result DB 15.

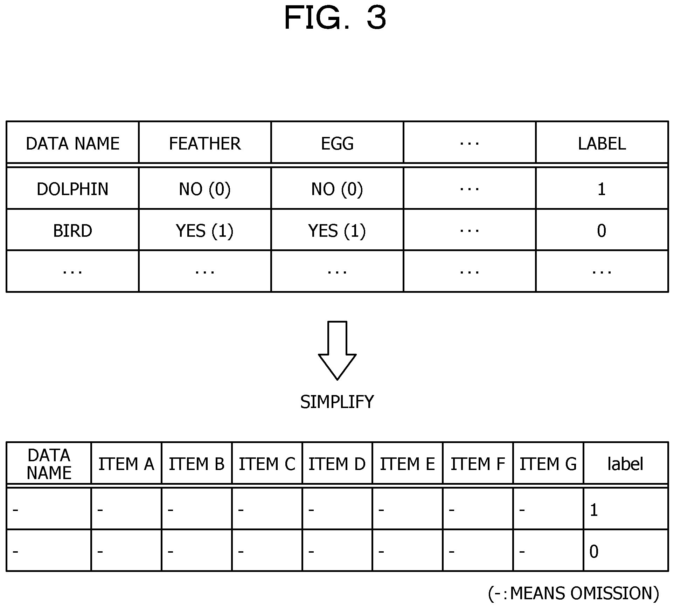

The input data DB 14 is an example of a dataset used to evaluate a machine learning algorithm. FIG. 3 is a diagram for explaining an example of input data stored in the input data DB 14. In FIG. 3, an example is illustrated in which a label "1" is set to input data determined as a mammal and a label "0" is set to input data that is not determined as a mammal. As illustrated in FIG. 3, the input data includes "data name, feather, egg, ..., and label". Here, the "data name" is information used to identify the input data. The "feather, egg", or the like are data items and correspond to explanatory variables, and the "label" is a data item indicating correct answer information and corresponds to an objective variable indicating a class.

In this way, an input dataset stored in the input data DB 14 is data in a tabular format in which each data item such as the data name, the feather, or the label is set as a column and input data including each data item (set value or the like) is set as a row. Note that, in the present embodiment, as illustrated in the lower diagram in FIG. 3, in order to simplify the description, the data items may be abbreviated as an item A, an item B, a label, or the like.

The evaluation result DB 15 is a database that stores an evaluation result of each machine learning algorithm, executed by the control unit 20 to be described later. The evaluation result DB 15 stores the evaluation result in association with an executed time stamp, a user name who has requested to execute evaluation, information about input data used for evaluation, and a machine learning algorithm to be evaluated. Note that, since the stored information will be described later, detailed description thereof is omitted here.

The control unit 20 is a processing unit that performs overall control of the information processing device 10 and, for example, is implemented by a processor or the like. The control unit 20 includes a generation unit 21, a selection unit 22, an evaluation execution unit 23, and a display control unit 24. Note that the generation unit 21, the selection unit 22, the evaluation execution unit 23, and the display control unit 24 can be implemented, for example, as an electronic circuit included in a processor or a process to be executed by the processor.

The generation unit 21 is a processing unit that extracts a data item corresponding to a generation condition (extraction condition) or a combination of data items, as selection target data (rule), from the input data DB 14, according to the generation condition based on a correspondence relationship between a combination of one or a plurality of features and label information. Here, it can be said that the extraction condition is a condition used to generate a rule.

Specifically, the generation unit 21 executes preprocessing for discretizing input data, such as one-hot expression for a category column and discretization using minimum description length principle (MDLP) for a numerical value column. Subsequently, the generation unit 21 extracts (generate) a rule corresponding to a hypothesis from the preprocessed input data. Here, the hypothesis is a set of the plurality of rules, and each rule is a combination of columns. Furthermore, since the rule to be extracted (combination of columns) differs depending on setting of a minimum value of a sample ratio (hereinafter, referred to as column extraction parameter or simply referred to as parameter), a plurality of rules is set between "0.0 to 1.0" and extracted.

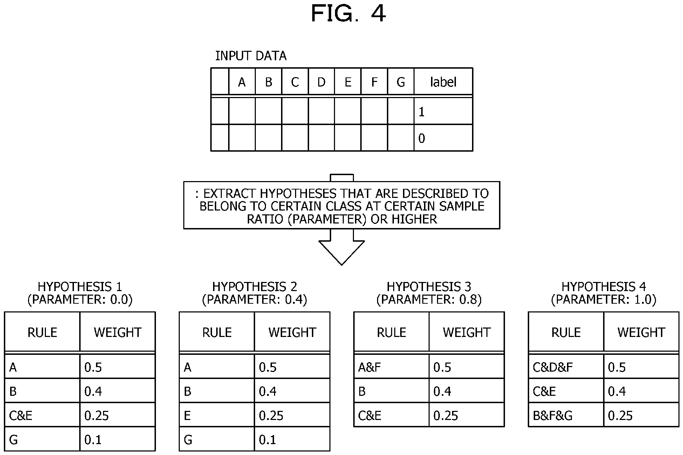

FIG. 4 is a diagram for explaining generation of a rule. As illustrated in FIG. 4, the generation unit 21 extracts a hypothesis 1 to which 0.0 is set as the parameter (column extraction parameter), a hypothesis 2 to which 0.4 is set as the parameter, a hypothesis 3 to which 0.8 is set as the parameter, and a hypothesis 4 to which 1.0 is set as the parameter, from the preprocessed input data. Here, each hypothesis includes "rule, weight". The "rule" is a combination of columns corresponding to the hypothesis, and the "weight" is a weight of the rule in the hypothesis.

In the example in FIG. 4, it is indicated that "A, 0.5", "B, 0.4", "C & E, 0.25", and "G, 0.1" are extracted as the "rule, weight" corresponding to the hypothesis 1. Furthermore, it is indicated that "A, 0.5", "B, 0.4", "E, 0.25", and "G, 0.1" are extracted as the "rule, weight" corresponding to the hypothesis 2. It is indicated that "A & F, 0.5", "B, 0.4", and "C & E, 0.25" are extracted as the "rule, weight" corresponding to the hypothesis 3. It is indicated that "C & D & F, 0.5", "C & E, 0.4", and "B & F & G, 0.25" are extracted as the "rule, weight" corresponding to the hypothesis 4.

For example, "A, 0.5" of the hypothesis 1 indicates that a column "item A" is extracted as data belonging to the hypothesis 1 and a weight in the hypothesis 1 is "0.5". Furthermore, "C & E, 0.5" of the hypothesis 3 indicates that an AND condition of a column "item C" and a column "item E" is extracted as data belonging to the hypothesis 3 and a weight in the hypothesis 3 is "0.5". Here, the "item" is not a value of data itself and is an item that is a superordinate concept of the data. That is, referring to the example in FIG. 3, for data in which "feather (none)" and "egg (none)" is the "label (1), the A described above corresponds to an item "feather" that is the data item name, not "feather (none)" or the like. Note that description is simplified as "none" here. However, a "numerical value" is set.

Then, the generation unit 21 outputs each hypothesis generated in this way and the "rule, weight" belonging to each hypothesis to the selection unit 22. Note that, here, an example has been described where a hypothesis is generated and a rule corresponding to each hypothesis is extracted. However, the present invention is not limited to this. For example, the "rule, weight" can be generated in advance by an administrator or the like, and it is possible to extract a "rule" used for machine learning in the past and calculate and use a weight (importance) from a use ratio of the "rule".

Returning to FIG. 2, the selection unit 22 is a processing unit that selects selection data (selection rule) that satisfies a specific condition, from among the rules of each hypothesis generated by the generation unit 21. Specifically, the selection unit 22 extracts a set of rules corresponding to a specific condition "the number of columns is equal to or more than two", from among the rules of each hypothesis (combination of columns) and outputs these rules to the evaluation execution unit 23 as the selection data.

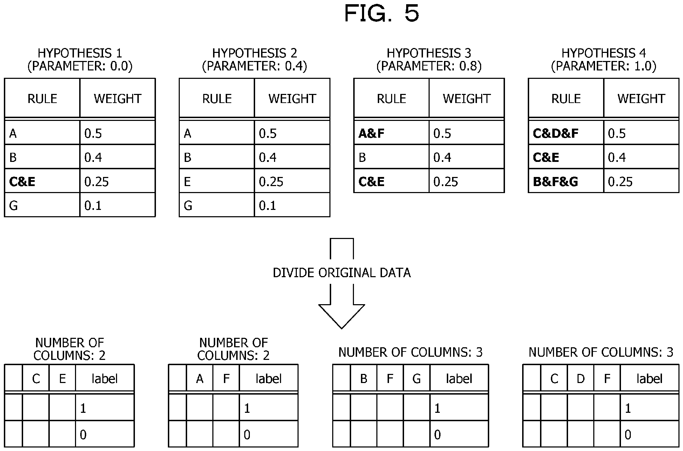

FIG. 5 is a diagram for explaining selection of a rule. As illustrated in FIG. 5, the selection unit 22 selects the rule "C & E" that is a combination of two columns, from among the rules belonging to the hypothesis 1. Since there is no rule corresponding to the rule belonging to the hypothesis 2, the selection unit 22 does not perform selection. Similarly, the rules "A & F" and "C & E" that are combinations of two columns are selected, from among the rules belonging to the hypothesis 3. Furthermore, the selection unit 22 selects the rule "C & E" that is a combination of two columns and the rules "C & D & F" and "B & F & G" that are combinations of three columns, from among the rules belonging to the hypothesis 4.

Subsequently, the selection unit 22 extracts data (selection data) corresponding to the selected rule, from the input data. For example, as illustrated in FIG. 5, the selection unit 22 generates a dataset obtained by extracting a column (item C), a column (item E), and a column (label) from the input data, for the selected rule "C & E". Similarly, the selection unit 22 generates a dataset obtained by extracting a column (item A), a column (item F), and a column (label) from the input data, for the rule "A & F". The selection unit 22 generates a dataset obtained by extracting a column (item B), a column (item F), a column (item G), and a column (label) from the input data, for the rule "B & F & G". The selection unit 22 generates a dataset obtained by extracting a column (item C), a column (item D), a column (item F), and a column (label) from the input data, for the rule "C & D & F".

The evaluation execution unit 23 is a processing unit that evaluates a plurality of machine learning algorithms to be evaluated, using each dataset selected by the selection unit 22. Specifically, the evaluation execution unit 23 performs machine learning using data belonging to each selected rule with all the machine learning algorithms (machine learning method), searches for all parameters, and performs evaluation without performing optimization. Note that, for the parameter search performed here, general machine learning can be adopted.

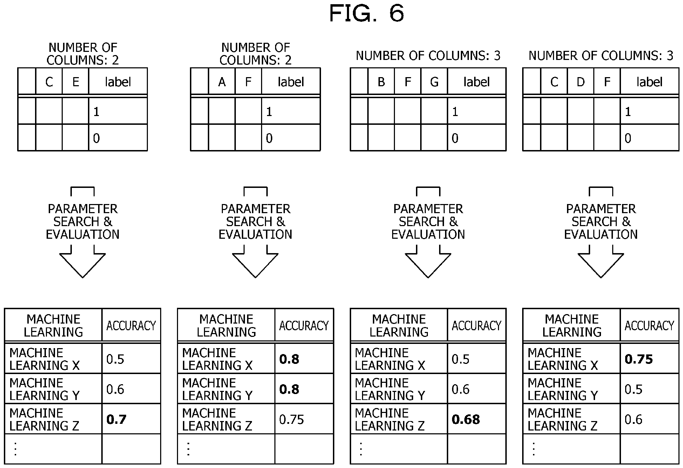

FIG. 6 is a diagram for explaining evaluation of the machine learning model. As illustrated in FIG. 6, the evaluation execution unit 23 performs machine learning using each of machine learning algorithms X, Y, and Z using row data of "item C, item E, and label" as training data, about data of "item C, item E, and label" corresponding to two that is the number of columns and acquires accuracy of each machine learning algorithm. In other words, the evaluation execution unit 23 performs machine learning using each data of "item C, item E" as an explanatory variable and data of the "label" as an objective variable with each machine learning algorithm, and acquires accuracy "0.5" of the machine learning model X, accuracy "0.6" of the machine learning model Y, and accuracy "0.7" of the machine learning model Z.

Similarly, the evaluation execution unit 23 performs machine learning using each machine learning algorithm using "item A, item F, label" corresponding to two that is the number of columns as training data and acquires the accuracy "0.8" of the machine learning model X, the accuracy "0.8" of the machine learning model Y, and the accuracy "0.75" of the machine learning model Z.

Furthermore, the evaluation execution unit 23 performs machine learning using each machine learning algorithm using "item B, item F, item G, label" corresponding to three that is the number of columns as training data and acquires the accuracy "0.5" of the machine learning model X, the accuracy "0.6" of the machine learning model Y, and the accuracy "0.68" of the machine learning model Z.

Furthermore, the evaluation execution unit 23 performs machine learning using each machine learning algorithm using "item C, item D, item G, label" corresponding to three that is the number of columns as training data and acquires the accuracy "0.75" of the machine learning model X, the accuracy "0.5" of the machine learning model Y, and the accuracy "0.6" of the machine learning model Z.

Thereafter, the evaluation execution unit 23 calculates pseudo accuracy based on the result of machine learning and the weight of the rule and searches for a machine learning algorithm with high accuracy in many hypotheses.

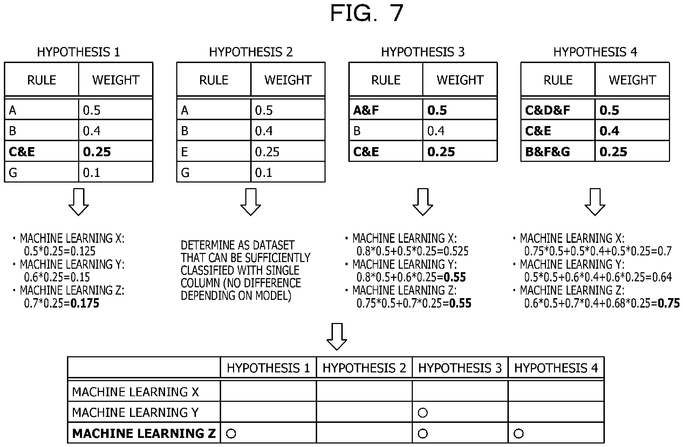

FIG. 7 is a diagram for explaining accuracy prediction of a machine learning model. As illustrated in FIG. 7, the evaluation execution unit 23 calculates a multiplication result of the accuracy of each machine learning algorithm and the weight of the rule "C & E" selected from among the rules of the hypothesis 1 as the pseudo accuracy. In other words, the evaluation execution unit 23 calculates "0.5 × 0.25 = 0.125" as "pseudo accuracy of machine learning algorithm X = accuracy × weight", calculates "0.6 × 0.25 = 0.15" as "pseudo accuracy of machine learning algorithm Y", and calculates "0.7 × 0.25 = 0.175" as "pseudo accuracy of machine learning algorithm Z".

Similarly, the evaluation execution unit 23 calculates each pseudo accuracy "(accuracy × weight of A & F) + (accuracy × weight of C & E)", using the respective weights of the rules "A & F" and "C & E" selected from among the rules of the hypothesis 3. In other words, the evaluation execution unit 23 calculates "0.8 × 0.5 + 0.5 × 0.25 = 0.525" as "pseudo accuracy of machine learning algorithm X", calculates "0.8 × 0.5 + 0.6 × 0.25 = 0.55" as "pseudo accuracy of machine learning algorithm Y", and calculates "0.75 × 0.5 + 0.7 × 0.25 = 0.55" as "pseudo accuracy of machine learning algorithm Z".

Similarly, the evaluation execution unit 23 calculates each pseudo accuracy "(accuracy × weight of C & D & F) + (accuracy × weight of C & E) + (accuracy × weight of B & F & G)", using the respective weights of the rules "C & D & F", "C & E", and "B & F & G" selected from among the rules of the hypothesis 4. In other words, the evaluation execution unit 23 calculates "0.75 × 0.5 + 0.5 × 0.4 + 0.5 × 0.25 = 0.7" as "pseudo accuracy of machine learning algorithm X", calculates "0.5 × 0.5 + 0.6 × 0.4 + 0.6 × 0.25 = 0.64" as "pseudo accuracy of machine learning algorithm Y", and calculates "0.6 × 0.5 + 0.7 × 0.4 + 0.68 × 0.25 = 0.75" as "pseudo accuracy of machine learning algorithm Z".

Note that the evaluation execution unit 23 determines that the hypothesis 2 is a dataset that can be sufficiently classified with a single column (with no difference depending on model).

As a result of these, the evaluation execution unit 23 determines that a model with high accuracy in many hypotheses as an appropriate machine learning model. In other words, the evaluation execution unit 23 evaluates the "machine learning algorithm Z" for the hypothesis 1, the "machine learning algorithm Y" and the "machine learning algorithm Z" for the hypothesis 3, and the "machine learning algorithm Z" for the hypothesis 4 as appropriate models and outputs the models to the display control unit 24.

The display control unit 24 is a processing unit that displays and outputs an execution result by the evaluation execution unit 23. Specifically, the display control unit 24 displays and outputs each hypothesis and the evaluation result by the evaluation execution unit 23 to the output unit 12, stores each hypothesis and the evaluation result in the storage unit 13, and transmits each hypothesis and the evaluation result to the administrator's terminal.

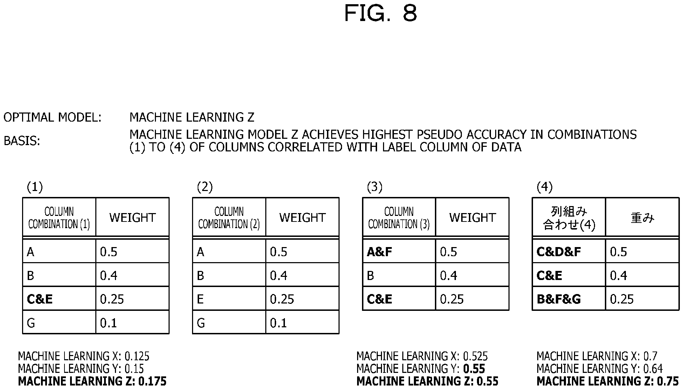

FIG. 8 is a diagram for explaining an example of an output result. As illustrated in FIG. 8, the display control unit 24 generates a screen including an optimal model with high accuracy in many hypotheses, a basis of the optimal model, each hypothesis used to select the optimal model, and information regarding the pseudo accuracy of each machine learning model or the like and displays and outputs the screen.

For example, in the "optimal model", the "machine learning model Z" determined by the evaluation execution unit 23 and content such as "the machine learning model Z achieves the highest pseudo accuracy in combinations (1) to (4) of columns correlated with a label column of data" or the like, as a basis are described. Furthermore, (1) to (4) respectively correspond to the hypotheses 1 to 4 described above, and the calculation result of the pseudo accuracy described above is written under (1) or the like.

### [Flow of Processing]

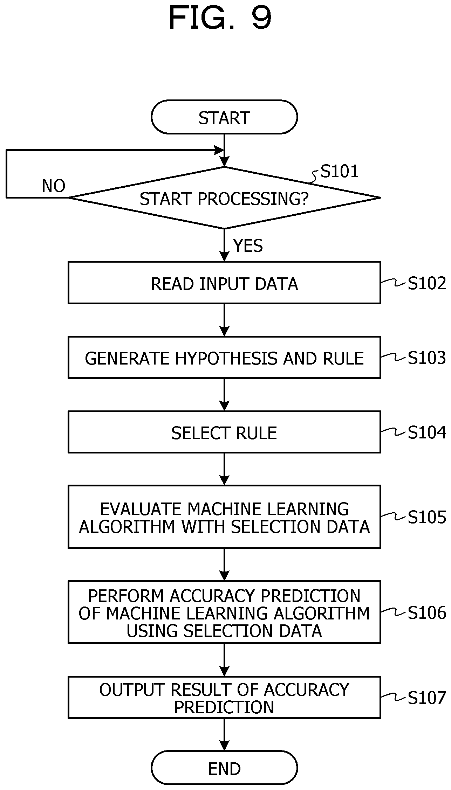

FIG. 9 is a flowchart illustrating a flow of processing according to the first embodiment. As illustrated in FIG. 9, when being instructed to start processing (S101: Yes), the generation unit 21 reads input data (S102) and generates a hypothesis and a rule included in the hypothesis (S103).

Then, the selection unit 22 selects the rule based on the specific condition (S104). Thereafter, the evaluation execution unit 23 performs machine learning with each machine learning model using the selected selection data (selection rule) (S105) and performs accuracy prediction (pseudo accuracy) of each machine learning model using a machine learning result (S106). Then, the display control unit 24 outputs a result of the accuracy prediction (S107).

### [Effects]

As described above, the information processing device 10 can perform sufficient comparison verification of each model in divided data by sufficiently searching only data that is meaningful for classification for a parameter. Furthermore, by presenting the result, the information processing device 10 can enhance user's satisfaction for the presented model.

For example, in a case where the tool described above or the like is used, it is almost impossible to search all pieces of data for all parameters, and a calculation time can be reduced by using only a part of original data. However, the number of combinations of selected parts of the original data exponentially increases as the number of columns increases, and this is not realistic. For example, if the original data includes 200 columns, the number of combinations obtained by selecting only three columns from the original data is "(200 × 199 × 198)/(3 × 2 × 1) = 1313400", which is not realistic.

On the other hand, the information processing device 10 according to the first embodiment can perform all search (do not optimize) in parameter adjustment, by narrowing the input data, not by optimizing the parameter adjustment, that is, not executing only a part of all the parameters. As a result, the information processing device 10 can calculate and evaluate the pseudo accuracy that is highly reliable although being pseudo. Therefore, it is possible to evaluate the machine learning model at high speed and with high accuracy.

### [Second Embodiment]

However, in the first embodiment, an example has been described where the set of the rules corresponding to the specific condition "the number of columns is equal to or more than two" is extracted from the rules of the hypothesis (combination of columns). However, the specific condition is not limited to this. This specific condition may be a condition for extracting a rule included in a certain number of hypotheses, from among hypotheses that is described to belong to a certain class at a certain sample ratio or higher. Therefore, in the second embodiment, as another example of the specific condition, a condition "extracting a rule included in 70% or more of all hypotheses" will be described. Note that, it is assumed that the functional configuration or the like be similar to those in the first embodiment.

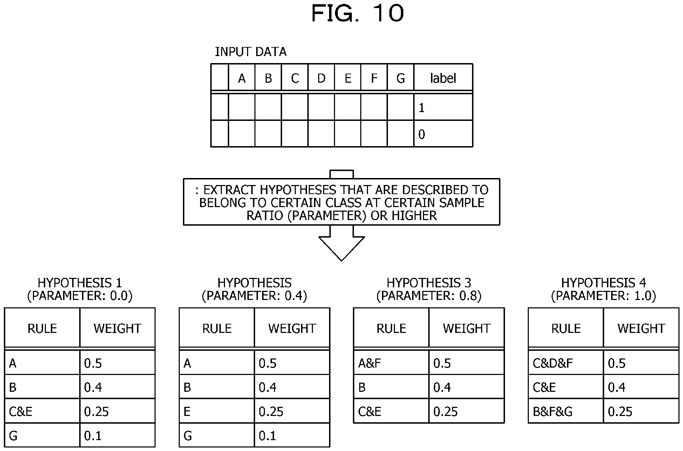

First, a generation unit 21 executes preprocessing on input data and extracts a rule corresponding to a hypothesis from the preprocessed input data. FIG. 10 is a diagram for explaining generation of the rule according to the second embodiment. As illustrated in FIG. 10, the generation unit 21 extracts a hypothesis 1 to which 0.0 is set as a parameter (column extraction parameter), a hypothesis 2 to which 0.4 is set as the parameter, a hypothesis 3 to which 0.8 is set as the parameter, and a hypothesis 4 to which 1.0 is set as the parameter, from the preprocessed input data.

In the example in FIG. 10, it is indicated that "A, 0.5", "B, 0.4", "C & E", 0.25", and "G, 0.1" are extracted as "rule, weight" corresponding to the hypothesis 1. Furthermore, it is indicated that "A, 0.5", "B, 0.4", "E, 0.25", and "G, 0.1" are extracted as the "rule, weight" corresponding to the hypothesis 2. It is indicated that "A & F, 0.5", "B, 0.4", and "C & E, 0.25" are extracted as the "rule, weight" corresponding to the hypothesis 3. It is indicated that "C & D & F, 0.5", "C & E, 0.4", and "B & F & G, 0.25" are extracted as the "rule, weight" corresponding to the hypothesis 4.

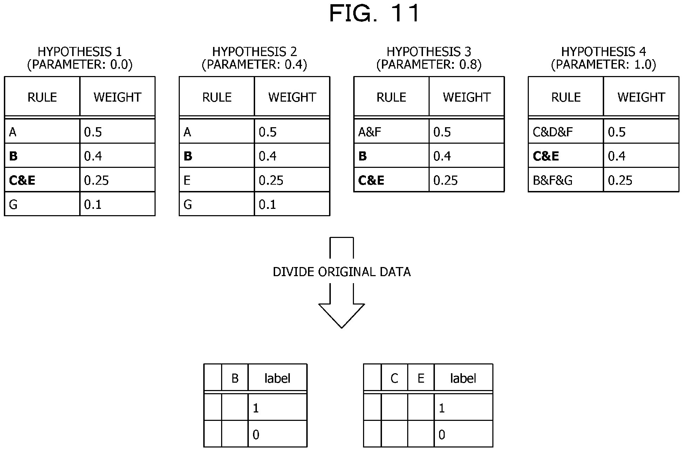

Next, a selection unit 22 selects selection data that satisfies the specific condition "extracting a rule included in 70% or more of all hypotheses" from among the rules of each hypothesis generated by the generation unit 21. FIG. 11 is a diagram for explaining selection of the rule according to the second embodiment. As illustrated in FIG. 11, the selection unit 22 selects a rule "B" and a rule "C & E" included in three or more hypotheses ((3/4) × 100 = 75%), from among the rules included in the four hypotheses.

Then, the selection unit 22 extracts data (selection data) corresponding to the selected rule, from the input data. For example, as illustrated in FIG. 11, the selection unit 22 generates a dataset obtained by extracting "column (item B) and column (label)" from the input data, for the selected rule "B". Furthermore, the selection unit 22 generates a dataset obtained by extracting "column (item C)", column (item E), and column (label)" from the input data, for the selected rule "C & E".

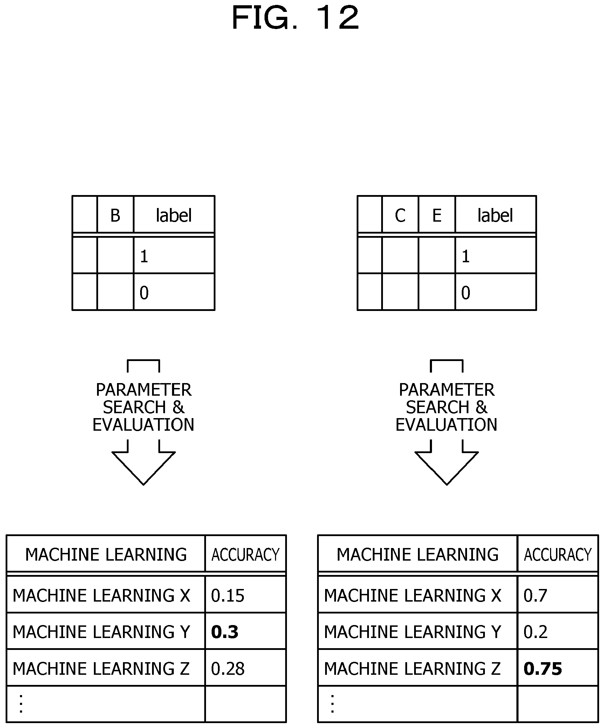

Next, an evaluation execution unit 23 evaluates a plurality of machine learning algorithms to be evaluated, using each dataset selected by the selection unit 22. FIG. 12 is a diagram for explaining the evaluation of the machine learning model according to the second embodiment. As illustrated in FIG. 12, the evaluation execution unit 23 performs machine learning using each of the machine learning algorithms X, Y, and Z using data of "item B, label" corresponding to one that is the number of columns as training data, and acquires accuracy of each machine learning algorithm. In other words, the evaluation execution unit 23 performs machine learning using data of "item B" as an explanatory variable and data of "label" as an objective variable, with each machine learning algorithm, and acquires the accuracy "0.15" of the machine learning model X, the accuracy "0.3" of the machine learning model Y, and the accuracy "0.28" of the machine learning model Z.

Similarly, the evaluation execution unit 23 performs machine learning using each machine learning algorithm using "item C, item E, label" corresponding to two that is the number of columns as training data and acquires the accuracy "0.7" of the machine learning model X, the accuracy "0.2" of the machine learning model Y, and the accuracy "0.75" of the machine learning model Z.

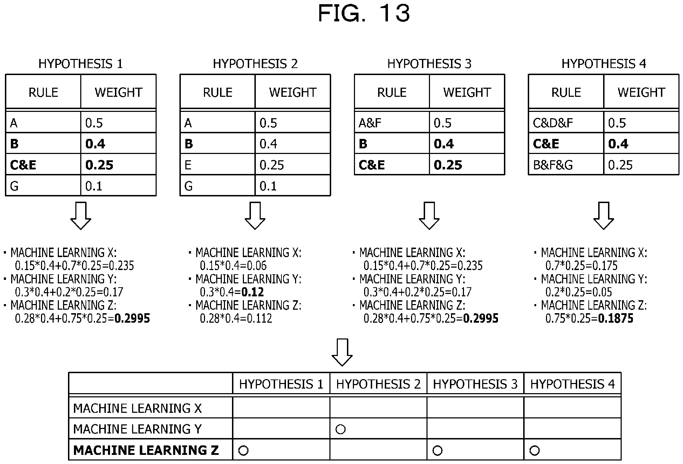

Next, the evaluation execution unit 23 calculates pseudo accuracy based on the result of machine learning and the weight of the rule and searches for a machine learning algorithm with high accuracy in many hypotheses. FIG. 13 is a diagram for explaining accuracy prediction of the machine learning model according to the second embodiment. As illustrated in FIG. 13, the evaluation execution unit 23 calculates pseudo accuracy "(accuracy × weight of B) + (accuracy × weight of C & E)" using the accuracy of each machine learning algorithm and each weight of the rules "B" and "C & E" selected from among the rules of the hypothesis 1. In other words, the evaluation execution unit 23 calculates "0.15 × 0.4 + 0.7 × 0.25 = 0.235" as "pseudo accuracy of machine learning algorithm X", calculates "0.3 × 0.4 + 0.2 × 0.25 = 0.17" as "pseudo accuracy of machine learning algorithm Y", and calculates "0.28 × 0.4 + 0.75 × 0.25 = 0.2995" as "pseudo accuracy of machine learning algorithm Z".

Similarly, the evaluation execution unit 23 calculates each pseudo accuracy "(accuracy × weight of B)", using the weight of the rule "B" selected from among the rules of the hypothesis 2. In other words, the evaluation execution unit 23 calculates "0.15 × 0.4 = 0.06" as "pseudo accuracy of machine learning algorithm X", calculates "0.3 × 0.4 = 0.12" as "pseudo accuracy of machine learning algorithm Y", and calculates "0.28 × 0.4 = 0.112" as "pseudo accuracy of machine learning algorithm Z".

Furthermore, the evaluation execution unit 23 calculates pseudo accuracy "(accuracy × weight of B) + (accuracy × weight of C & E)" using the accuracy of each machine learning algorithm and each weight of the rules "B" and "C & E" selected from among the rules of the hypothesis 3. In other words, the evaluation execution unit 23 calculates "0.15 × 0.4 + 0.7 × 0.25 = 0.235" as "pseudo accuracy of machine learning algorithm X", calculates "0.3 × 0.4 + 0.2 × 0.25 = 0.17" as "pseudo accuracy of machine learning algorithm Y", and calculates "0.28 × 0.4 + 0.75 × 0.25 = 0.2995" as "pseudo accuracy of machine learning algorithm Z".

Furthermore, the evaluation execution unit 23 calculates each pseudo accuracy "(accuracy × weight of C & E)", using the weight of the rule "C & E" selected from among the rules of the hypothesis 4. In other words, the evaluation execution unit 23 calculates "0.7 × 0.25 = 0.175" as "pseudo accuracy of machine learning algorithm X", calculates "0.2 × 0.25 = 0.05" as "pseudo accuracy of machine learning algorithm Y", and calculates "0.75 × 0.25 = 0.1875" as "pseudo accuracy of machine learning algorithm Z".

As a result of these, the evaluation execution unit 23 determines that a model with high accuracy in many hypotheses as an appropriate machine learning model. In other words, the evaluation execution unit 23 evaluates the "machine learning algorithm Z" for the hypotheses 1, 3, and 4 and the "machine learning algorithm Y" for the hypothesis 2 as appropriate models, and outputs the models to a display control unit 24.

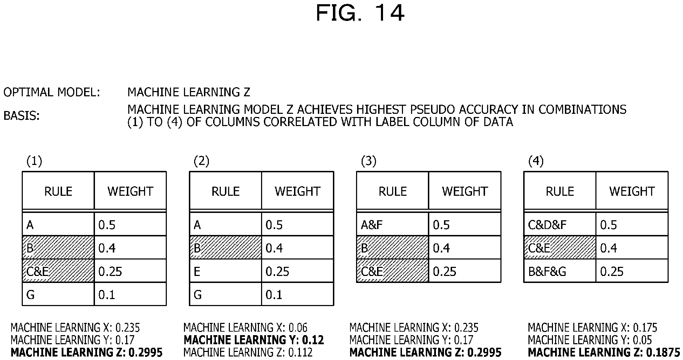

Finally, the display control unit 24 displays and outputs the execution result by the evaluation execution unit 23. FIG. 14 is a diagram for explaining an example of the output result according to the second embodiment. As illustrated in FIG. 14, the display control unit 24 generates a screen including an optimal model with high accuracy in many hypotheses, a basis of the optimal model, each hypothesis used to select the optimal model, and information regarding the pseudo accuracy of each machine learning model or the like and displays and outputs the screen.

For example, in the "optimal model", the "machine learning model Z" and content such as "the machine learning model Z achieves the highest pseudo accuracy in combinations (1) to (4) of columns correlated with a label column of data" or the like, as a basis are described. Furthermore, (1) to (4) respectively correspond to the hypotheses 1 to 4 described above, and the calculation result of the pseudo accuracy described above is written under (1) or the like.

Note that, since various conditions other than the specific condition "extracting a rule included in 70% or more of all hypotheses" described in the second embodiment can be set, an example of the conditions will be described. For example, as the specific condition, "top two hypotheses having a high ratio to be included, among all hypotheses" can be set.

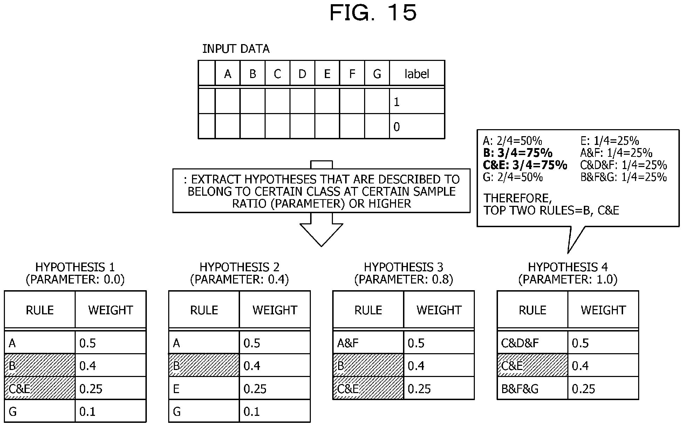

FIG. 15 is a diagram for explaining another example of the rule selection. As illustrated in FIG. 15, it is assumed that the generation unit 21 extract a hypothesis 1 to which 0.0 is set as a parameter (column extraction parameter), a hypothesis 2 to which 0.4 is set as the parameter, a hypothesis 3 to which 0.8 is set as the parameter, and a hypothesis 4 to which 1.0 is set as the parameter, from preprocessed input data.

In such a state, the selection unit 22 selects a rule corresponding to the specific condition "top two hypotheses having a high ratio to be included, among all hypotheses", from among the rules included in each of the four hypotheses.

In other words, since a rule "A" is included in the hypotheses 1 and 2 of the four hypotheses, the selection unit 22 calculates "(2/4) × 100 = 50%", and since a rule "B" is included in the hypotheses 1 to 3 of the four hypotheses, the selection unit 22 calculates "(3/4) × 100 = 75%". Since a rule "C & E" is included in the hypotheses 1 to 3 of the four hypotheses, the selection unit 22 calculates "(3/4) × 100 = 75%", and since a rule "G" is included in the hypotheses 1 and 2 of the four hypotheses, the selection unit 22 calculates "(2/4) × 100 = 50%".

Furthermore, since a rule "E" is included in the hypothesis 2 of the four hypotheses, the selection unit 22 calculates "(1/4) × 100 = 25%", and since a rule "A & F" is included in the hypothesis 3 of the four hypotheses, the selection unit 22 calculates "(1/4) × 100 = 25%". Since a rule "C & D & F" is included in the hypothesis 4 of the four hypotheses, the selection unit 22 calculates "(1/4) × 100 = 25%", and since a rule "B & F & G" is included in the hypothesis 4 of the four hypotheses, the selection unit 22 calculates "(1/4) × 100 = 25%".

As a result of these, the selection unit 22 selects the rules "B" and "C & E" as the rule corresponding to the specific condition "top two hypotheses having a high ratio to be included, among all hypotheses". Note that, since subsequent processing is similar to that in the first embodiment and the second embodiment, description of the processing will be omitted.

As described above, even in a case where a large number of rules included in the hypothesis are generated, the information processing device 10 can appropriately narrow rules for accuracy evaluation, by designating the specific condition. Furthermore, since the information processing device 10 can arbitrarily set the specific condition, it is possible to provide accuracy evaluation environment suitable for needs of each user such as a user who wants to use many rules with emphasis on accuracy or a user who has used rules narrowed with emphasis on speed.

### [Third Embodiment]

Incidentally, while the embodiments of the present invention have been described above, the present invention may be implemented in a variety of different modes in addition to the embodiments described above.

### [Numerical Values, etc.]

The number of hypotheses, the number of rules, the number of machine learning algorithms, a hypothesis generation technique, a rule generation technique, various numerical value examples, various thresholds, information described on the output screen, or the like described in the embodiments above are merely examples and can be arbitrarily changed. Note that, as the weight of the rule, for example, in addition to a weight calculated through logistic regression, various values obtained when a rule is extracted can be adopted. If merely an example is exemplified, "chi-square", "normalized mutual information", or the like can be adopted. Note that the "chi-square" is a value obtained by calculating a frequency of a positive example or a negative example in the entire sample as an expected value (theoretical value), it is evaluated whether or not a rule and a positive example or a negative example are independent, using a frequency of the positive example or the negative example in a sample that hits the rule as an observation value. The "normalized mutual information" indicates how many percent of an information amount of a label is obtained, by knowing information indicating whether or not a rule is hit.

### [System]

Pieces of information including the processing procedure, control procedure, specific name, various types of data and parameters described above or illustrated in the drawings may be arbitrarily modified unless otherwise noted.

In addition, each component of each device illustrated in the drawings is functionally conceptual and does not necessarily have to be physically configured as illustrated in the drawings. In other words, specific forms of distribution and integration of the devices are not limited to those illustrated in the drawings. That is, all or a part of the devices may be configured by being functionally or physically distributed or integrated in optional units according to various loads, use situations, or the like. Note that the generation unit 21 is an example of a generation unit, and the selection unit 22 and the evaluation execution unit 23 are examples of a calculation unit. Furthermore, the hypothesis is an example of a generation condition, and the selection target rule is an example of a rule.

Moreover, all or any part of individual processing functions performed in each device may be implemented by a central processing unit (CPU) and a program analyzed and executed by the CPU, or may be implemented as hardware by wired logic.

### [Hardware]

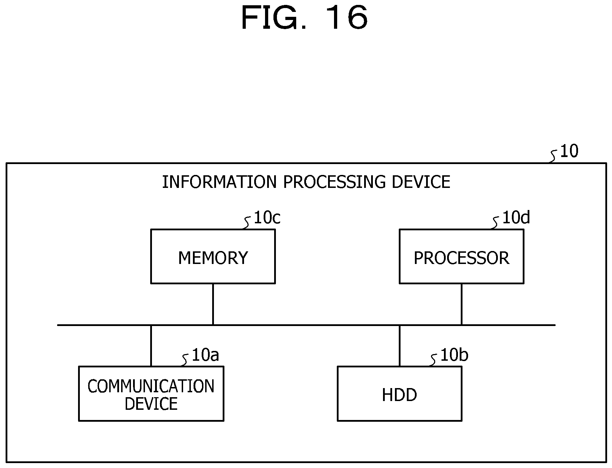

Next, a hardware configuration example of each device described in the embodiments above will be described. Note that, since each device have a similar hardware configuration, here, the information processing device 10 will be described as an example. FIG. 16 is a diagram for explaining a hardware configuration example. As illustrated in FIG. 16, the information processing device 10 includes a communication device 10a, a hard disk drive (HDD) 10b, a memory 10c, and a processor 10d. Furthermore, the individual units illustrated in FIG. 16 are mutually coupled by a bus or the like.

The communication device 10a is a network interface card or the like, and communicates with another server. The HDD 10b stores a program that activates the functions illustrated in FIG. 2 or the like, and a DB.

The processor 10d reads a program that executes processing similar to the processing of each processing unit illustrated in FIG. 2 or the like from the HDD 10b or the like, and develops the read program in the memory 10c, thereby activating a process that executes each function described with reference to FIG. 2 or the like. For example, this process executes a function similar to that of each processing unit included in the information processing device 10. Specifically, the processor 10d reads a program having functions similar to the generation unit 21, the selection unit 22, the evaluation execution unit 23, the display control unit 24, or the like from the HDD 10b or the like. Then, the processor 10d executes a process for executing processing similar to the generation unit 21, the selection unit 22, the evaluation execution unit 23, the display control unit 24, or the like.

As described above, the information processing device 10 operates as an information processing device that executes various processing methods by reading and executing the program. Furthermore, the information processing device 10 may also implement functions similar to the functions of the above-described examples by reading the above-described program from a recording medium by a medium reading device and executing the above-described read program. Note that other programs referred to in the embodiments are not limited to being executed by the information processing device 10. For example, the present invention can be similarly applied also to a case where another computer or server executes the program, or a case where such computer and server cooperatively execute the program.

This program can be distributed via a network such as the Internet. Furthermore, this program may be recorded in a computer-readable recording medium such as a hard disk, a flexible disk (FD), a compact disc read only memory (CD-ROM), a magneto-optical disk (MO), or a digital versatile disc (DVD), and may be executed by being read from the recording medium by a computer.

### REFERENCE SIGNS LIST

10 information processing device
11 communication unit
12 output unit
13 storage unit
14input data DB
15evaluation result DB
20control unit
21 generation unit
22 selection unit
23evaluation execution unit
24display control unit

## Claims

1. An accuracy calculation program that causes a computer to execute a process, the process comprising:
acquiring a data item that corresponds to a generation condition or a combination of the data items, based on the generation condition based on a correspondence relationship between a combination of one or a plurality of features and label information and an input dataset that is a set of input data that includes at least one data item, as a selection target rule; and
calculating accuracy of each of a plurality of machine learning algorithms, by using a dataset that holds only a data item used for a selection rule that is a selection target rule that satisfies a specific condition among the selection target rules.

2. The accuracy calculation program according to claim 1, wherein
the input dataset is a set of the input data in which the at least one data item and the label information are set as columns,
the acquiring processing acquires a combination of columns, in which column data of the label information that indicates to belong to a specific class and column data of the correlated data item are combined, as the selection target rule, from the input dataset, according to the generation condition, and
the calculating processing generates the dataset that holds only each data item used for each selection rule that satisfies a specific condition among the selection target rules and calculates accuracy of each of the plurality of machine learning algorithms, based on a result of executing each of the plurality of machine learning algorithms, by using data set to each data item in each selection rule as an explanatory variable and data set to the label information as an objective variable.

3. The accuracy calculation program according to claim 2, wherein the acquiring processing acquires a combination of the plurality of columns that satisfies each hypothesis, as the selection target rule for each of a plurality of hypotheses that indicates a condition that is determined as the generation condition and that is capable of being described to belong to the specific class, at a certain sample ratio or higher.

4. The accuracy calculation program according to claim 3, wherein the calculating processing calculates accuracy of each of the plurality of machine learning algorithms, by using a combination of columns that satisfies a predetermined condition to extract a combination of columns included in each hypothesis, among the plurality of combinations of the columns that satisfies each hypothesis, as the dataset.

5. The accuracy calculation program according to claim 4, wherein the calculating processing calculates the accuracy of each of the plurality of machine learning algorithms, by using a combination of columns with the number of columns equal to or more than a predetermined value as the dataset, from among the plurality of combinations of columns that satisfies each hypothesis.

6. The accuracy calculation program according to claim 4, wherein the calculating processing calculates the accuracy of each of the plurality of machine learning algorithms, by using a combination of columns included in a predetermined number or more hypotheses of all hypotheses as the dataset, among the plurality of combinations of columns that satisfies each hypothesis.

7. The accuracy calculation program according to claim 4, wherein the calculating processing calculates the accuracy of each of the plurality of machine learning algorithms, by using a combination of a predetermined upper number of columns with a high ratio to be included as the dataset, among all hypotheses, among the plurality of combinations of columns that satisfies each hypothesis.

8. The accuracy calculation program according to claim 3, wherein
the acquiring processing
extracts the combination of columns and weight information set to the combination of columns as the selection target rule, and
the calculating processing
predicts accuracy of each of the plurality of machine learning algorithms, by using the accuracy of each of the plurality of machine learning algorithms by using each selection rule included in the dataset and the weight information of the combination of columns selected as each selection rule, for each hypothesis, and
determines an optimal machine learning model, based on the accuracy predicted in each hypothesis.

9. The accuracy calculation program according to claim 8, for causing the computer to execute processing comprising: outputting information regarding the optimal machine learning model, information regarding each hypothesis, and the accuracy predicted by each of the plurality of machine learning algorithms in each hypothesis.

10. An accuracy calculation method executed by a computer, the accuracy calculation method comprising:
acquiring a data item that corresponds to a generation condition or a combination of the data items, based on the generation condition based on a correspondence relationship between a combination of one or a plurality of features and label information and an input dataset that is a set of input data that includes at least one data item, as a selection target rule; and
calculating accuracy of each of a plurality of machine learning algorithms, by using a dataset that holds only a data item used for a selection rule that is a selection target rule that satisfies a specific condition among the selection target rules.

11. An information processing device comprising:
an acquisition unit configured to acquire a data item that corresponds to a generation condition or a combination of the data items, based on the generation condition based on a correspondence relationship between a combination of one or a plurality of features and label information and an input dataset that is a set of input data that includes at least one data item, as a selection target rule; and
a calculation unit configured to calculate accuracy of each of a plurality of machine learning algorithms, by using a dataset that holds only a data item used for a selection rule that is a selection target rule that satisfies a specific condition among the selection target rules.
